# EUROPEAN PATENT APPLICATION

(11) **EP 3 955 421 A1**
(43) Date of publication of application: **16.02.2022**
(21) Application number: 20190483.6
(22) Date of filing: 11.08.2020
(51) Int. Cl.: H02K 1/14, H02K 15/06, H02K 3/24, H02K 3/48

(54) **SEGMENTED STATOR FOR A GENERATOR, COMPRISING A STRAP FOR FIXING AN END COIL**

(71) Applicant: Siemens Gamesa Renewable Energy A/S, 7330 Brande (DK)
(72) Inventor: Jensen, Jens Bomholt, 8700 Horsens (DK); Azar, Ziad, Sheffield, South Yorkshire S10 4ED (GB)
(74) Representative: Aspacher, Karl-Georg

(57) **Abstract**

It is described a segmented stator for a generator (5), in particular for a wind turbine (1). The stator comprises at least one stator segment (10) comprising teeth (15) and slots (21, 22, 23), in which coil windings (41, 42, 43) are inserted, wherein the teeth (15) extend from a yoke (13) of the stator in a radial direction (R) of the stator, wherein the stator segment (10) has an end in a circumferential direction (C) of the stator with an open slot (21, 22), into which an end coil winding (41, 42) is arranged, and the stator segment (10) comprises at least one duct (35); a strap (100) which extends at least partly at or along the end coil winding (41, 42) and in the duct (35) and fixes the end coil winding (41, 42) to the stator segment (10); and a recessed component (101, 102) having a recess (103) or a guide which guides the strap (100) into the duct (35).

## Description

### Field of invention

The present invention relates to a segmented stator for a generator, in particular for a generator for a wind turbine.

A conventional stator comprises a plurality of stator segments, each comprising teeth and slots, in which coil windings are inserted, wherein the teeth extend from a yoke of the stator in a radial direction of the stator. The stator segment has an end in a circumferential direction of the stator with an open slot, into which an end coil winding is arranged. Each tooth comprises at least one air duct for cooling the stator.

In concentrated winding generators or motors having double layer windings (i.e. two coils per slot), each tooth is equipped by one coil. For large size generator or motors, e.g. for direct-drive (DD) generators without gearbox for a wind turbine, when the stator is segmented, the end coil windings in the open slot at the end of segments have no mechanical support during transportation, assembly or operation.

EP 3 637 585 A1 suggests a strap system with required structural and electrical performances. This strap system is (diagonally) sewed in a number of airducts. If a sewing point is worn or broken, the whole chain of sewing can get lost.

### Summary of the Invention

There may be a need for a segmented stator, which endurance can be improved, and maintenance work can be reduced. This need may be met by the subject matters according to the independent claims. The present invention is further developed as set forth in the dependent claims.

According to a first aspect of the invention, a segmented stator for a generator, particularly for a wind turbine, is provided. The stator comprises at least one stator segment comprising teeth and slots, in which coil windings are inserted, wherein the teeth extend from a yoke of the stator in a radial direction of the stator, wherein the stator segment has an end in a circumferential direction of the stator with an open slot, into which an end coil winding is arranged, and the stator segment comprises at least one duct. The stator comprises a strap which extends at least partly at or along the end coil winding and in the duct and fixes the end coil winding to the stator segment, and a recessed component having a recess or a guide which guides the strap into the duct. The strap can extend at least partly at the end coil winding while contacting the same so as to directly fix the end coil winding to the stator segment. The strap can otherwise also extend at least partly along the end coil winding without contacting the same so as to indirectly fix the end coil winding to the stator segment, for example when another component is arranged therebetween.

The recess can have a V-shaped cross section so that the strap is fixed by pulling the strap down into the V-shaped recess. It is also conceivable to compress, to caulk or to otherwise deform the recess after having inserted the strap so that the strap can be fixed. The strap can also be fixed by a glue or a resin that adheres the strap inside the recess. A guide member can be provided, which is made of a metal or a resin based material in a V-, U- or O-shape and entirely or partly covers the recess to lock the strap into the recess.

Advantageously, the strap can be smoothly guided in the recess while preventing the strap from bending around sharp corners.

In an embodiment, the stator further comprises a support structure which supports the stator segment, wherein the support structure is the recessed component. For example, the recess can be prefabricated in the support structure to guide the strap from one duct to another. In an embodiment, the support structure comprises an end surface facing the circumferential direction of the stator, wherein the recess is formed in the end surface of the support structure in an angle in a range between 25° and 60°, preferably about 45°. An opening is formed at an edge between the end surface of the support structure and a support surface of the support structure, whereon the stator segment is supported. The strap is guided through the recess and leaves the recess through the opening. The opening is arranged at the duct.

In an embodiment, the stator segment is the recessed component. The stator segment can comprise an end surface facing the circumferential direction of the stator, a bottom surface and an inclined surface connecting the end surface and the bottom surface of the stator segment, wherein the recess is formed in the inclined surface of the stator segment.

In an embodiment, the stator further comprises a cover which covers the end coil winding, wherein the cover is the recessed component and comprises a wedge which is arranged above a top surface of the end coil winding. The wedge comprises an engaging structure which engages with an engagement structure of the tooth adjacent the end coil winding. In an embodiment, the wedge comprises at its top surface the recess, which is U-shaped or V-shaped. The strap can smoothly be guided in the recess in the wedge with a reduced risk of damaging the strap due to thermal and mechanical loads.

In an embodiment, the cover further comprises a retaining plate extending in a plane orthogonal to a rotational axis of the stator and retains the end coil winding, in particular by the aid of the strap.

In an embodiment, the stator further comprises a support structure which supports the stator segment, and a sheet member which is arranged at the support structure, wherein the support structure and the sheet member together form the recessed component so that the recess or the guide, which guides the strap into the duct, is formed between the support structure and the sheet member. In an embodiment, an opening is formed in the sheet member, wherein the strap is guided through the recess and leaves the recess through the opening, wherein the opening is arranged at the duct. For example, the recess can be implemented by adding a bended sheet metal that forms the recess preferably together with an extra machined groove in the support structure. The sheet member can also provide for a protection or a shielding for protecting the strap, for example by a bended shield part at the sheet member.

In an embodiment, the coil windings form concentrated windings.

In an embodiment, the stator further comprises at least one of the following: an insert which is arranged in or at the duct for supporting the strap, wherein the insert comprises a rounded edge or a chamfer for guiding the strap; and the guide member which is made of a metal or a resin based material in a V-, U- or O-shape and entirely or partly covers the recess to lock the strap into the recess.

In an embodiment, the strap is guided only over edges either being a rounded edge or having a chamfer.

In an embodiment, the stator comprises at least one of the following features: the duct is provided between two adjacent stator axial portions of the stator segment, and a spacer is arranged between the two adjacent stator axial portions to define the duct; the duct is an air duct for cooling the stator; the duct is provided as a radial through hole within at least one of the teeth.

According to a second aspect of the invention, a generator, in particular for a wind turbine, comprises the above-described stator and a rotor which is rotatable arranged around or inside the stator.

According to a third aspect of the invention, a wind turbine comprising the above-described generator. In an embodiment, the wind turbine is a direct-drive wind turbine.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a wind turbine and the different elements thereof;
- Fig. 2: shows a front view orthogonal to an axial direction of a stator segment according to the present invention;
- Fig. 3: shows a partial axonometric view of a segment stator for an electrical generator according to the present invention;
- Fig. 4: shows a perspective view of a part of a segmented stator according to a first embodiment, wherein a strap is omitted;
- Fig. 5: shows a perspective view of the part of the segmented stator of Fig. 4 with the strap;
- Fig. 6: shows a perspective view of a part of a segmented stator according to a second embodiment, wherein a strap is omitted;
- Fig. 7: shows a perspective view of a part of a cover of a segmented stator according to a third embodiment;
- Fig. 8: shows a perspective view of a part of a segmented stator according to a fourth embodiment, wherein a strap is omitted;
- Fig. 9: shows a cross-sectional view of the segmented stator according to Fig. 8; and
- Fig. 10: shows a longitudinal section along a generator according to an embodiment.

### Detailed Description

The illustrations in the drawings are schematically. It is noted that in different figures, similar or identical elements are provided with the same reference signs.

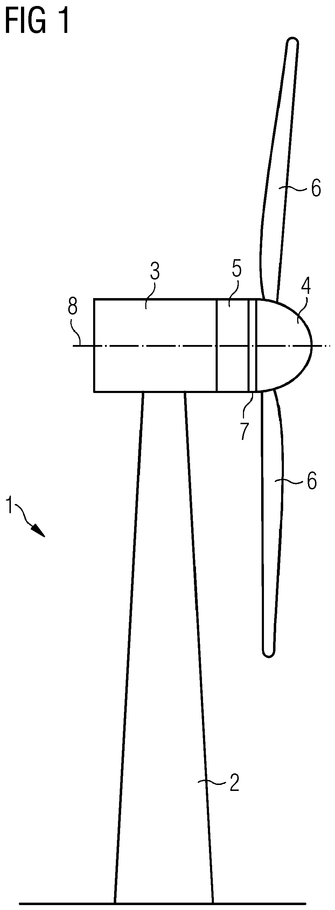

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

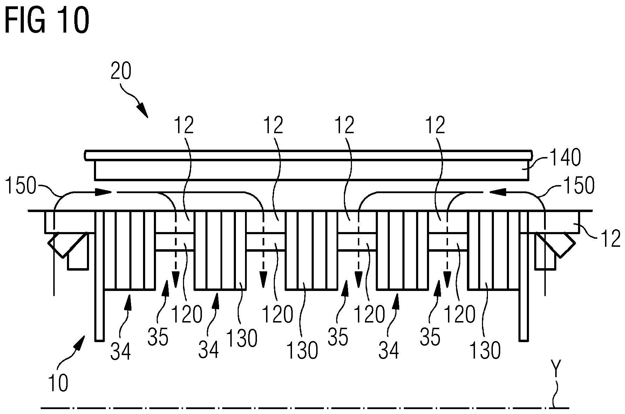

The wind turbine 1 furthermore comprises a generator 5. The generator 5 in turn comprises a rotor 20 (Fig. 10) connecting the generator 5 with the hub 4. The hub 4 is connected directly to the generator 5, thus the wind turbine 1 is referred to as a gearless, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is basically suitable for both types of wind turbines 1, but is particularly advantageous in the direct-driven wind turbine.

The generator 5 is accommodated within the nacelle 3. The generator 5 is arranged and prepared for converting the rotational energy from the hub 4 into electrical energy in the shape of an AC power. The generator 5 comprises the rotor 20 (Fig. 10) and a stator. The stator comprises a plurality of stator segments 10 which are described below.

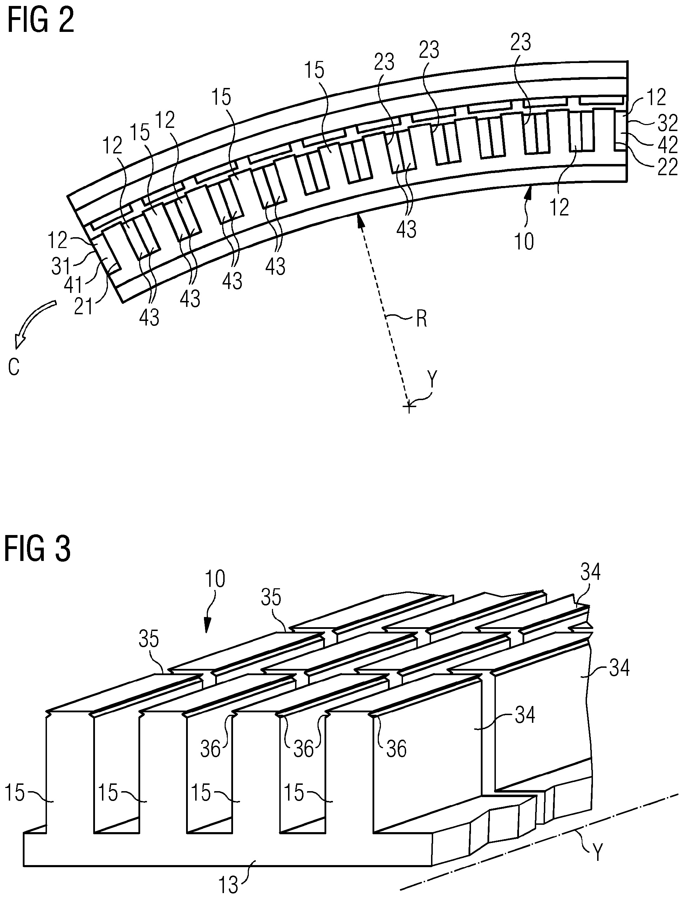

**Fig. 2** shows a front view orthogonal to an axial direction in a rotational axis Y of a stator segment 10 according to the present invention, and **Fig. 3** shows a partial axonometric view of a stator segment 10 for the electrical generator 5 according to the present invention. The stator segment 10 comprises a plurality of stator axial portions 34 which are arrayed along the longitudinal or rotational axis Y. Each stator axial portion 34 comprises a stator yoke 13 and a plurality of teeth 15 protruding in a radial direction R orthogonal to the longitudinal axis Y from the stator yoke 13 up to respective tooth radial ends, where notches 36 for respectively attaching a plurality of wedges (as better clarified in the following) are provided. The notches 36 form an engagement structure for a wedge 106 which is described later.

The stator segment 10 further comprises a plurality of intermediate slots 23 between two respective teeth 15, and a first open slot and a second open slot 22. Each stator axial portion 34 circumferentially extends between the first open slot 21 and the second open slot 22, each of the first open slot 21 and of the second open slot 22 circumferentially extend between a respective tooth 15 (respectively, the first tooth 15 and the last tooth 15 of the stator segment 10) of the stator axial portion 34 and a respective first side opening 31 and second side opening 32 of the stator axial portion 34. The stator axial portion 34circumferentially spans between the first side opening 31 and the second side opening 32. The stator segment 10 can be a laminated stator segment 10 which is formed by laminating a plurality of metal sheets (see Fig. 10) .

The stator segment 10 further comprises a coil winding 12 in the slots 21, 22, 23. The stator segment 10 may include any number of intermediate slots 23 circumferentially comprised between the first open slot 21 and the second open slot 22. The circumferential extension of the first open slot 21 and the second open slot 22 is about the half of the circumferential extension of the intermediate slot 23.

According to a possible embodiment of the present invention, the smallest version of the stator segment 10 according to the present invention can include only one tooth between the first open slot 21 and of the second open slot 22, i.e. without any intermediate slot 23.

The coil winding 12 may be a coil concentrated winding or, alternatively, a double-layer coil distributed winding. The coil winding 12 is of the double layer type, including a double coil 43 in each intermediate slot 23, a first end coil winding 41 in the first open slot 21 and a second end coil winding 42 in the second open slot 22.

The stator axial portions 34are separated from each other by air ducts 35. The width of the air ducts 35 can be defined by spacers (not shown in Fig. 3, but in the embodiment of Fig. 10). Two adjacent stator axial portions 34 are separated by a respective air duct 35 for letting a cooling fluid flow in the air duct 35. In the embodiment of Fig. 3, the air duct 35 radially penetrates the stator segment 10.

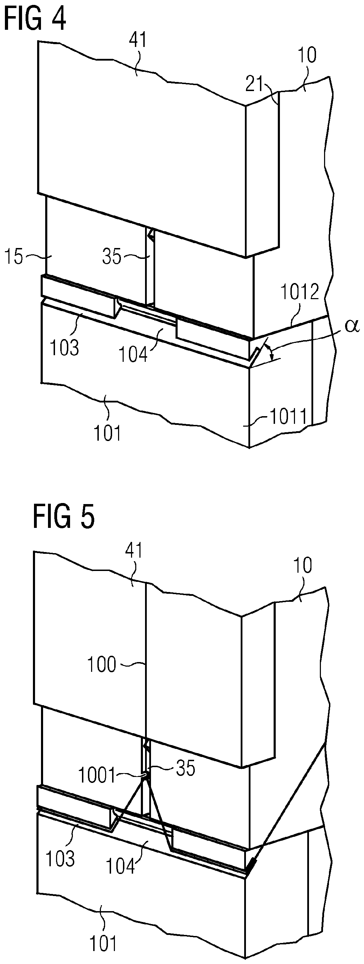

**Fig. 4** shows a perspective view of a part of a segmented stator according to a first embodiment, wherein a strap is omitted, and **Fig. 5** shows a perspective view of the part of the segmented stator of Fig. 4 with the strap 100. The stator segment 10 has an end in a circumferential direction C (see Fig. 2) of the stator with the open slot 21, into which the end coil winding 41 is arranged. Each tooth 15 comprises at least one of the air ducts 35 for cooling the stator. The strap 100 extends at least partly at the end coil winding 41 and in the air duct 35 and fixes the end coil winding 41 to the stator segment 10. The segmented stator further comprises a recessed component 101 having a recess 103 or a guide which guides the strap 100 into the air duct 35. In a modification, the duct 35 can be filled by a resin material to fix the strap 100 therein, so that the duct 35 is not used as an air duct for cooling the stator.

In the first embodiment, the recessed component 101 is a support structure 101 which supports the stator segment 10. The recess 103 can be prefabricated in the support structure 101 to guide the strap 100 from one air duct 35 to another. The support structure 101 comprises an end surface 1011 facing the circumferential direction C of the stator, and the recess 103 is formed in the end surface 1011 in an angle α in a range between 25° and 60°, preferably of about 45°. An opening 104 is formed at an edge between the end surface 1011 and a support surface 1012 of the support structure 101, whereon the stator segment 10 is supported. In the embodiment of Fig. 4, the opening 104 is formed by removing a part of the end surface 1011. Further, the opening 104 is arranged at the air duct 35. As shown in Fig. 5, the strap 100 is guided through the recess 103 and leaves the recess 103 through the opening 104.

As shown in Fig. 5, the strap 100 can include a node 1001, where a first part of the strap 100 from the recess 103 at the left-hand side in Fig. 5 merges a second part of the strap 100 from the recess 103 at the right-hand side in Fig. 5. Furthermore, after having merged the first and second parts of the strap 100, a third part of the strap 100 enters the air duct 35 behind the node 1001 and a fourth part of the strap 100 extends at (along) the end coil winding 41 and fixes the end coil winding 41 to the stator segment 10. The node 1001 is preferably arranged at the air duct 35.

This strap solution employs a mechanical locking between two strap branches in the airduct 35. By guiding the strap 100 in the recess 103, the strap branches are deflected in an angle of about 45° at a location distant from the first end coil winding 41 and especially distant from an edge of the (laminated) stator segment 10.

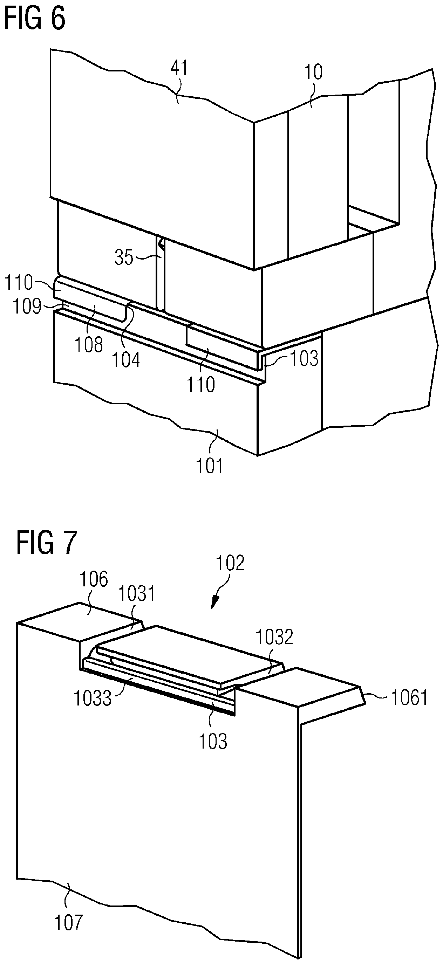

**Fig. 6** shows a perspective view of a part of a segmented stator according to a second embodiment, wherein a strap is omitted. However, the strap 100 can be provided in the same manner as shown in Fig. 5. The second embodiment differs from the first embodiment in that the support structure 101 does not need to be provided with a prefabricated, angled recess 103. Instead, a sheet member 108 is arranged on a top surface of the support structure 101, wherein the support structure 101 and the sheet member 108 together form the recessed component so that the recess 103 or the guide, which guides the strap 100 into the air duct 35, is formed between the support structure 101 and the sheet member 108. In the second embodiment, the support structure 101 can optionally comprise a (prefabricated or machined) groove 109 which is at least partly covered by the sheet member 108. The sheet member 108 can have a rounded edge (left-hand side of the sheet member 108 in Fig. 6) or an angled edge (right-hand side of the sheet member 108 in Fig. 6). An angle of the angled edge can be between 45° and 90°, preferably 90°. Thus, the recess 103 is implemented by adding the sheet member 108 in a shape of a bended sheet metal that forms the recess 103, preferably together with the extra machined groove 109 in the support structure 101. The sheet member 108 also provides for a protection or a blend for protecting the strap 100, for example by a bended shield part 110.

In the second embodiment, the sheet member 108 is arranged on the top surface of the support structure 101; however, the sheet member 108 can also be arranged at a side surface, a bottom surface or any other surface of the support structure 101.

An opening 104 is formed in the sheet member 108, wherein the strap 100 can be guided through the recess 103 and leave the recess 103 through the opening 104. The opening 104 is arranged at the air duct 35. The strap 100 can be provided in the same manner as in the first embodiment of Fig. 5.

In the first and second embodiments, the strap 100 extends at least partly at the end coil winding 41 and contacts the end coil winding 41 to directly fix the end coil winding 41 to the stator segment 10.

**Fig. 7** shows a perspective view of a part of a cover 102 of a segmented stator according to a third embodiment. The cover 102 is the recessed component in the third embodiment. The cover 102 covers the end coil winding 41 and comprises a wedge 106 which is arranged above a top surface of the end coil winding 41. The wedge 106 comprises an engaging structure 1061 which engages with the notch or engagement structure 36 (see Fig. 2) of the left-hand tooth 15 adjacent the end coil winding 41.

The wedge 106 comprises at its top surface a U-shaped or V-shaped recess 103. The U-shaped recess 103 has a pair of parallel grooves 1031, 1032 which extend in the circumferential direction C of the stator, and a connecting groove 1033 connecting both parallel grooves 1031, 1032 and extending in the rotational axis Y of the stator. The connecting groove 1033 is formed at an end surface of the cover 102 (or of the wedge 106 or of a retaining plate 107 which is described later) facing the circumferential direction C of the stator. The connecting groove 1033 can be omitted if the recess 103 is V-shaped. An apex of the V-shape can be rounded so that the strap 100 is smoothly guided there along. By providing the U-shaped or V-shaped recess 103 in the wedge 106, the strap can be guided from one air duct 35 to another.

The cover 102 further comprises a retaining plate 107 extending in a plane orthogonal to a rotational axis Y of the stator and retaining the end coil winding 41. The retaining plate 107 can be fixed by the strap (not shown) to the stator segment 10 with the end coil winding 41 sandwiched therebetween so that the strap indirectly fixes the end coil winding 41 to the stator segment 10. That is, in the third embodiment, the strap extends along the end coil winding 41 without contacting the end coil winding 41 to indirectly fix the end coil winding 41 to the stator segment 10, because the retaining plate 107 is arranged between the strap and the end coil winding 41.

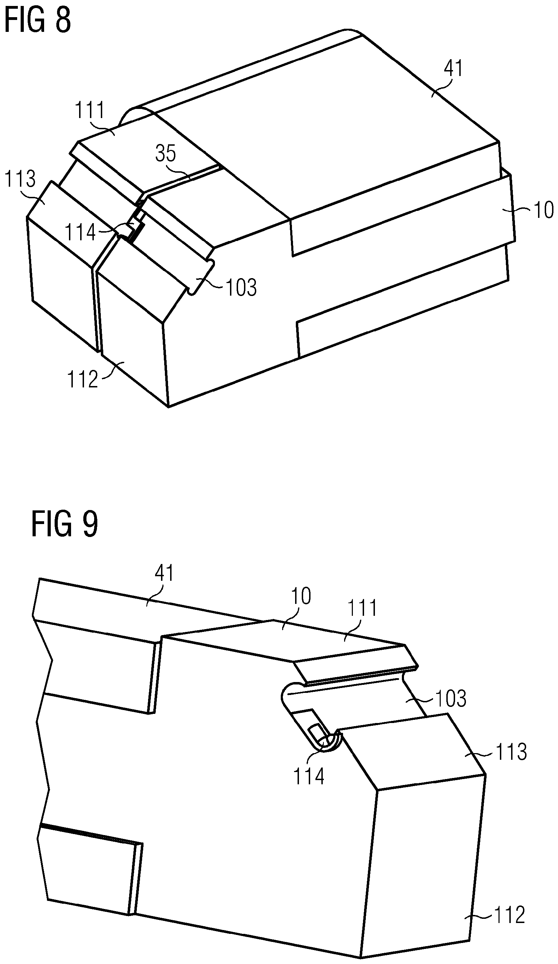

**Fig. 8** shows a perspective view of a part of a segmented stator 10 according to a fourth embodiment, wherein a strap is omitted, and **Fig. 9** shows a cross-sectional view of the segmented stator 10 according to Fig. 8.

In the fourth embodiment, the stator segment 10 is the recessed component. The stator segment 10 comprises an end surface 111 facing the circumferential direction C of the stator, a bottom surface 112 and an inclined surface 113 connecting the end surface 111 and the bottom surface 112 of the stator segment 10. The recess 103 is formed in the inclined surface 113 of the stator segment 10.

The stator 10 further comprises an insert 114 which is arranged in or at the air duct 35 for supporting the strap 100, wherein the insert 114 comprises a rounded edge or a chamfer for guiding the strap 100. The insert 114 can be formed of a resin-based material or of a metal sheet, for example. The insert 114 prevents the strap 100 from being teared at a sharp edge.

Also in the other embodiments, the stator 10 can further comprise the insert 114 which is arranged in or at the air duct 35 for supporting the strap 100, wherein the insert 114 comprises a rounded edge or a chamfer for guiding the strap 100. Also a guide member (not shown) can be provided, which is made of a metal or a resin based material in a V-, U- or O-shape and entirely or partly covers the recess 103 to lock the strap 100 into the recess.

In all embodiments, the recess 103 can have a V-shaped cross section so that the strap 100 is fixed by pulling the strap 100 down in the V-shaped recess 103. It is also conceivable to compress, to caulk or to otherwise deform the recess 103 after having inserted the strap 100 so that the strap 100 can be fixed within the recess 103. The strap 100 can also be fixed by a glue or a resin that adheres the strap 100 inside the recess 103.

In all embodiments, the strap 100 can be guided only over edges either being a rounded edge or having a chamfer. By these measures, the strap 100 is further prevented from being teared at a sharp edge.

**Fig. 10** shows a longitudinal section along the generator 5 according to an embodiment. The generator 5 comprises the stator formed by a plurality of the stator segments 10 and a rotor 20 having a number of rotor magnets 140. The rotor 20 is rotatable around the rotational or longitudinal axis Y and relatively to the stator. Each stator segment 10 comprises the plurality stator axial portions 34, wherein each stator axial portion 34 is built up by a number of adjacently disposed thin metal plates 130 which are stacked along the longitudinal axis Y. The metal plates 130 can be made of steel sheets, for instance. The coil windings 12 are wound around the tooth 15 of the stator axial portions 34, i.e., radially extending portions of the respective metal plates 130.

Further, adjacent stator axial portions 34 are separated by means of spacers 120 so that the radially extending air ducts 35 are defined. The resulting air flow is indicated by arrows 150.

In a modification, the duct or the air duct 35 can be provided as a radial through hole within at least one of the teeth 15.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A segmented stator for a generator (5), in particular for a wind turbine (1), the stator comprising:
at least one stator segment (10) comprising teeth (15) and slots (21, 22, 23), in which coil windings (41, 42, 43) are inserted, wherein the teeth (15) extend from a yoke (13) of the stator in a radial direction (C) of the stator, wherein the stator segment (10) has an end in a circumferential direction (C) of the stator with an open slot (21, 22), into which an end coil winding (41, 42) is arranged, and the stator segment (10) comprises at least one duct (35);
a strap (100) which extends at least partly at or along the end coil winding (41, 42) and through the duct (35) and fixes the end coil winding (41, 42) to the stator segment (10); and
a recessed component (10, 101, 102) having a recess (103) or a guide which guides the strap (100) into the duct (35) .

2. The stator according to the preceding claim, further comprising:
a support structure (101) which supports the stator segment (10), wherein the support structure (101) is the recessed component.

3. The stator according to the preceding claim, wherein:
the support structure (101) comprises an end surface (1011) facing the circumferential direction (C) of the stator, wherein the recess (103) is formed in the end surface (1011) of the support structure (101) in an angle (α) in a range between 25° and 60°, preferably about 45°, wherein an opening (104) is formed at an edge between the end surface (1011) of the support structure (101) and a support surface (1012) of the support structure (101), whereon the stator segment (10) is supported, wherein the strap (100) is guided through the recess (103) and leaves the recess (103) through the opening (104), wherein the opening (104) is arranged at the duct (35).

4. The stator according to any one of the preceding claims, wherein
the stator segment (10) is the recessed component.

5. The stator according to the preceding claim, wherein
the stator segment (10) comprises an end surface (111) facing the circumferential direction (C) of the stator, a bottom surface (112) and an inclined surface (113) connecting the end surface (111) and the bottom surface (112) of the stator segment (10), wherein the recess (103) is formed in the inclined surface (113) of the stator segment (10).

6. The stator according to any one of the preceding claims, further comprising:
a cover (102) which covers the end coil winding (41, 42), wherein the cover (102) is the recessed component and comprises a wedge (106) which is arranged above a top surface of the end coil winding (41, 42), wherein the wedge (106) comprises an engaging structure (1061) which engages with an engagement structure (36) of the tooth (15) adjacent the end coil winding (41, 42); wherein
the wedge (106) comprises at its top surface the recess (103) which is preferably U-shaped or V-shaped.

7. The stator according to the preceding claim, wherein the cover (102) further comprises a retaining plate (107) extending in a plane orthogonal to a rotational axis (Y) of the stator and retains the end coil winding (41, 42).

8. The stator according to claim 1, further comprising:
a support structure (101) which supports the stator segment (10); and
a sheet member (108) which is arranged at the support structure (101), wherein the support structure (101) and the sheet member (108) together form the recessed component so that the recess (103) or the guide, which guides the strap (100) into the duct (35), is formed between the support structure (101) and the sheet member (108).

9. The stator according to the preceding claim, wherein:
an opening (104) is formed in the sheet member (108), wherein the strap (100) is guided through the recess (103) and leaves the recess (103) through the opening (104), wherein the opening (104) is arranged at the duct (35).

10. The stator according to any one of the preceding claims, wherein:
the coil windings (41, 42, 43) form concentrated windings.

11. The stator according to any one of the preceding claims, further comprising at least one of the following:
an insert (114) which is arranged in or at the duct (35) for supporting the strap (100), wherein the insert (114) comprises a rounded edge or a chamfer for guiding the strap (100); and
a guide member which is made of a metal or a resin based material in a V-, U- or O-shape and entirely or partly covers the recess (103) to lock the strap (100) into the recess (103) .

12. The stator according to any one of the preceding claims, wherein:
the strap (100) is guided only over edges either being a rounded edge or having a chamfer.

13. The stator according to any one of the preceding claims, comprising at least one of the following features:
the duct (35) is provided between two adjacent stator axial portions (34) of the stator segment (10), and a spacer (120) is arranged between the two stator axial portions (34)to define the duct (35);
the duct (35) is an air duct for cooling the stator;
the duct (35) radially penetrates the stator segment (10) ;
the duct (35) is provided as a radial through hole within at least one of the teeth (15).

14. A generator (5), particularly for a wind turbine (1), comprising a stator according to any one of the preceding claims and an electric rotor which is rotatable arranged around or inside the stator.

15. A wind turbine (1) comprising the generator (5) according to the preceding claim, in particular a direct-drive wind turbine.
